**Europäisches Patentamt**

**European Patent Office**

**Office européen des brevets**

(19)

(11) Veröffentlichungsnummer: **0 074 586**
**B1**

(12) # EUROPÄISCHE PATENTSCHRIFT

(45) Veröffentlichungstag der Patentschrift:
**09.03.88**

(21) Anmeldenummer: **82108156.9**

(22) Anmeldetag: **03.09.82**

(51) Int. Cl.⁴: **H 01 S  3/03,** H 01 S  3/097,
H 01 S  3/081

(54)  **Laser des TE-Typs, insbesondere Hochenergielaser.**

(30) Priorität: **14.09.81  DE 3136447**

(43) Veröffentlichungstag der Anmeldung:
**23.03.83 Patentblatt 83/12**

(45) Bekanntmachung des Hinweises auf die Patenterteilung:
**09.03.88 Patentblatt 88/10**

(84) Benannte Vertragsstaaten:
**AT CH DE FR GB IT LI**

(56) Entgegenhaltungen:
**EP - A - 0 024 576**
**EP - A - 0 048 407**

**OPTICS COMMUNICATIONS, Band 28, Nr. 1, Januar 1979, Seiten 104-106, Amsterdam, NL; H. PUMMER et al.: "Discharge pumped F2 laser at 1580 A"**

(73) Patentinhaber: **Siemens Aktiengesellschaft Berlin und München, Wittelsbacherplatz 2, D-8000 München 2 (DE)**

(72) Erfinder: **Cirkel, Hans-Jürgen, Dr., Anderlohrstrasse 9, D-8520 Erlangen (DE)**
Erfinder: **Bette, Willi, Penzoldtstrasse 5, D-8520 Erlangen (DE)**
Erfinder: **Müller, Reinhard, Vogelherd 97, D-8520 Erlangen (DE)**

**Beschreibung**

Die Erfindung bezieht sich auf einen Laser des TE-Typs, insbesondere einen Hochenergielaser, mit Anregung durch möglichst homogene, lichtbogenfreie Kondensatorentladung im Gasraum zwischen mindestens zwei parallel zur optischen Achse des Lasers innerhalb einer Laserkammer sich erstreckenden und mit Abstand einander gegenüberliegenden ersten und zweiten Elektroden, so wie im Oberbegriff des Anspruchs 1 näher ausgeführt und aus Optics Communications, Vol. 28, 1979, S. 104–106 bekannt.

TE-Laser (TE = transversely excited) eignen sich besonders für fotochemische Anwendungen im industriellen Bereich. Für diese Anwendungen sind möglichst hohe Energien bei langen Impulsdauern und hohen Wiederholraten wünschenswert. Gleichzeitig ist ein hoher elektrischer Wirkungsgrad für die Erzeugung von Laserlicht anzustreben.

Aus physikalischen Gründen ist nur eine maximale Energie pro Volumeneinheit möglich, so dass es günstig erscheint, möglichst grosse Volumina anzuregen. Bei hohen Wiederholraten ist es erforderlich, zwischen zwei Laserimpulsen das Gas mehrere Male auszutauschen, so dass das Lasergas mit einer relativ hohen Geschwindigkeit zwischen den Elektroden des Lasers strömen muss. Aus wirtschaftlichen und technologischen Gründen ist der Strömungswiderstand zu minimieren, um die erforderliche Leistung des Ventilators zur Gasumwälzung klein halten zu können. Ausserdem ist von besonderer Bedeutung für die Erzielung hoher elektrischer Wirkungsgrade die Pulsformung durch den Anregungskreis, wie es in DE-A-31 28 206.7, veröffentlicht am 27.01.83 näher dargelegt ist. Dort sind auch Ausführungsbeispiele für das pulsformende Netzwerk, dass z.B. in Blümlein- oder in Charge-Transfer-Schaltung ausgeführt sein kann, gegeben.

Bei den Hochenergielasern bestehen eine Reihe von Forderungen, die sich zum Teil widersprechen. So sollen die Laserkammer und die Zuleitungen zum zugehörigen pulsformenden Netzwerk möglichst niederinduktiv aufgebaut sein. Dies kann man durch einen möglichst kompakten Aufbau erreichen. Dadurch ergibt sich allerdings die Gefahr der Ausbildung von Gleitfunken auf den Innenwandungen des Lasergehäuses, die ihre Ursache im wesentlichen in sogenannten tangentiellen Feldkomponenten haben. Diese Potential- und Gleitfunkenprobleme werden noch dadurch verstärkt, dass man in den Entladungsraum sogenannte Hilfselektroden zur Vorionisierung einbaut, wie sie z.B. in der älteren Anmeldung gemäss EP-A-0 048 407 näher erläutert sind.

Zur Beherrschung der Potential- und Gleitfunkenprobleme ist in DE-A-31 26 375, veröffentlicht am 27.01.83 im wesentlichen vorgeschlagen worden, zwischen der einen Laserelektrode und der sie umgebenden Stromrückführung Hohlräume im Isolationsmaterial des Gehäusemantels anzuordnen und in diese Hohlräume Schirmelektroden einzufügen, die an das Potential der innerhalb der Schirmelektrode liegenden Laser-Elektrode angeschlossen sind. Ein besonderes Problem dieser bereits vorgeschlagenen Laser-Anordnung, die sich sowohl auf longitudinal als auch auf transversal vom Gas durchströmte Laser bezieht und von der die Erfindung ausgeht, besteht darin, dass insbesondere bei der Integration der Hilfselektroden zur Vorionisierung in den Entladungsraum – auch bei Einführung der erläuterten Abschirmmassnahmen – ein nicht zu unterschreitender Mindestabstand zur Stromrückführung eingehalten werden muss, der eine Erhöhung der Induktivität des Lasergehäuses mit sich bringt bzw. der Induktivität eine untere Grenze setzt, die insbesondere durch die Durchschlagfestigkeit des verwendeten Isoliermaterials gegeben ist.

Der Erfindung liegt die Aufgabe zugrunde, einen Laser, insbesondere Hochenergielaser gemäss Gattungsbegriff zu schaffen, welcher bei sehr geringer Eigeninduktivität ein verhältnismässig grosses Entladungsvolumen aufweist. Der neue Laser soll grundsätzlich für longitudinale als auch für transversale Gasströmung verwendbar und mit relativ wenig konstruktiven Änderungen von der transversalen in die longitudinale Bauform und umgekehrt umänderbar sein. In seiner transversalen Bauform soll er einen besonders geringen Durchströmungswiderstand aufweisen, so dass der mehrfache Gasaustausch zwischen jeweils zwei Laserimpulsen bei relativ kleiner Pumpleistung ermöglicht ist. Ein weiteres Merkmal der Aufgabenstellung besteht darin, den Laser so auszubilden, dass mit ihm eine Modulbauweise ermöglicht ist.

Erfindungsgemäss wird der gestellte Aufgabenkomplex durch die im Kennzeichen des Anspruchs 1 angegebenen Merkmale in der Hauptsache gelöst. Vorteilhafte Weiterbildungen des Erfindungsgegenstandes sind in den Unteransprüchen 2 bis 15 beschrieben.

Charakteristisch für die vorliegende Erfindung ist es, dass die Teilentladungsräume die metallische Stromzuführung umschliessen. Durch die hierbei mögliche symmetrische Anordnung kann ein völlig gleichartiges Verhalten der Laserimpulse erreicht werden. Die neue Hochenergielaser-Anordnung eignet sich auch grundsätzlich für eine Mehrfachanordnung in einer Art Modulbauweise, d.h., sie ist nicht auf zwei einander gegenüberliegende Teilelektrodenpaare beschränkt. Viele Bauelemente sind dabei mehrfach bzw. vielfach vorhanden, so die Teilelektroden, die Stromzuführungen und ihre Isolierungen, die Schirmelektroden mit ihrer Isolierstoffummantelung, die Hilfselektroden zur Vorionisierung usw., was einer Fertigung nach dem Bausteinprinzip entgegenkommt.

Im folgenden wird anhand der Zeichnung, in der mehrere Ausführungsbeispiele der Erfindung dargestellt sind, diese noch näher erläutert.

Darin zeigt in schematischer Darstellung unter Fortlassung der für das Verständnis der Erfindung nicht erforderlichen Teile:

Fig. 1 in einem Querschnitt längs der Linie I–I aus Fig. 2 und mit Blick in Richtung der optischen Achse des Lasers eine Laserkammer für einen Hochenergielaser als Ausführungsform der Erfindung mit transversaler Lasergasströmung G1 und gestrichelter Andeutung G2, dass dieses Lasersystem grundsätzlich auch für longitudinale Lasergasströmung geeignet ist, wobei zur Vereinfachung die Gehäusewandteile fortgelassen und in der linken Hälfte der Figur das pulsformende Netzwerk lediglich angedeutet ist;

Fig. 2 den Gegenstand nach Fig. 1 in einem Längsschnitt längs der Linie II–II aus Fig. 1 und mit Blick in Richtung der transversalen Lasergasströmung;

Fig. 3 in einer im Vergleich zu Fig. 1 verkleinerten Darstellung die Gesamtansicht des an einer Stirnseite geöffneten Hochenergielasers mit Gehäuse, Einström- und Ausströmtrichter sowie pulsformendem Netzwerk;

Fig. 4 eine Modifikation des Lasers nach Fig. 1 für longitudinale Lasergasströmung, im Ausschnitt in einer der Fig. 2 entsprechenden Darstellung, wobei der Schnitt I'–I' nach Fig. 4 der Darstellung nach Fig. 1 entspricht, weshalb von einer gesonderten Darstellung des Schnittes I'–I' abgesehen wurde;

Fig. 5 die optische Hintereinander-Schaltung der beiden Teilentladungsräume eines Lasers nach Fig. 1 in Seitenansicht und

Fig. 6 die optische Hintereinander-Schaltung der vier Teilentladungsräume eines aus zwei Lasern nach Fig. 1 bestehenden Laser-Mehrfachsystems in Seitenansicht.

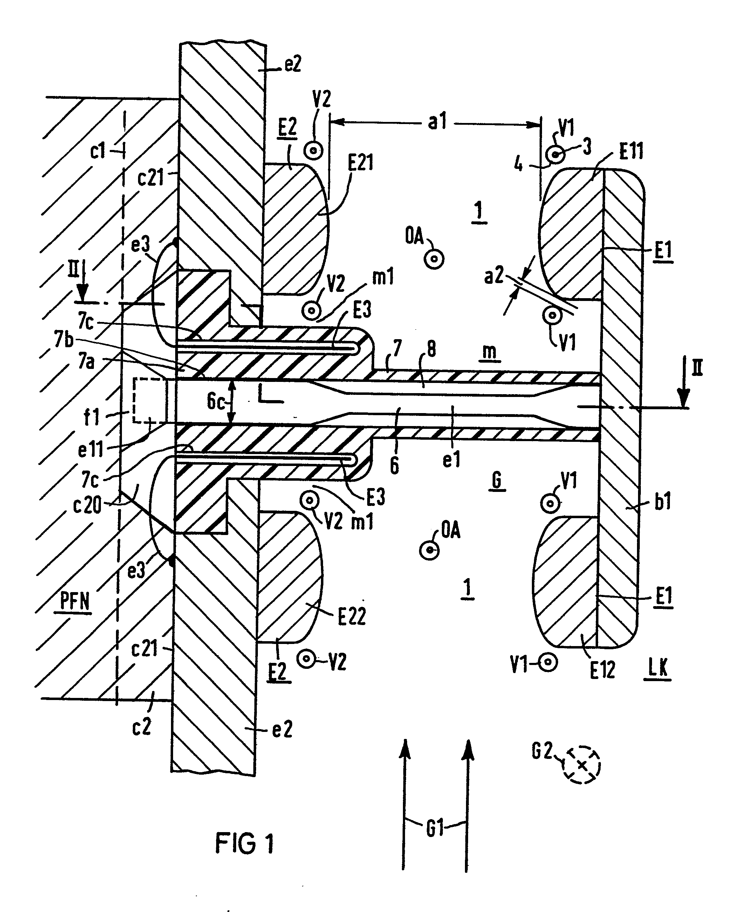

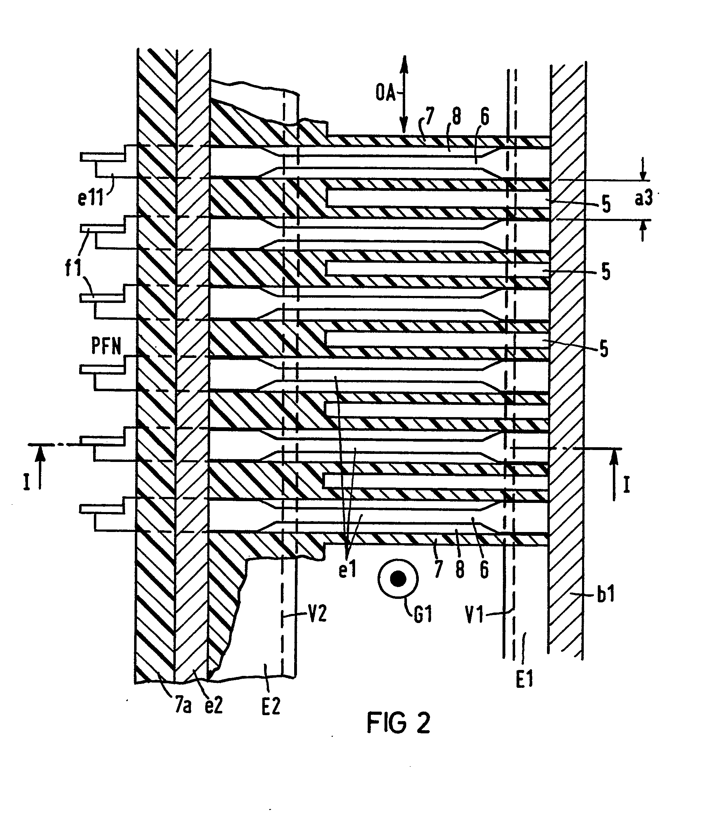

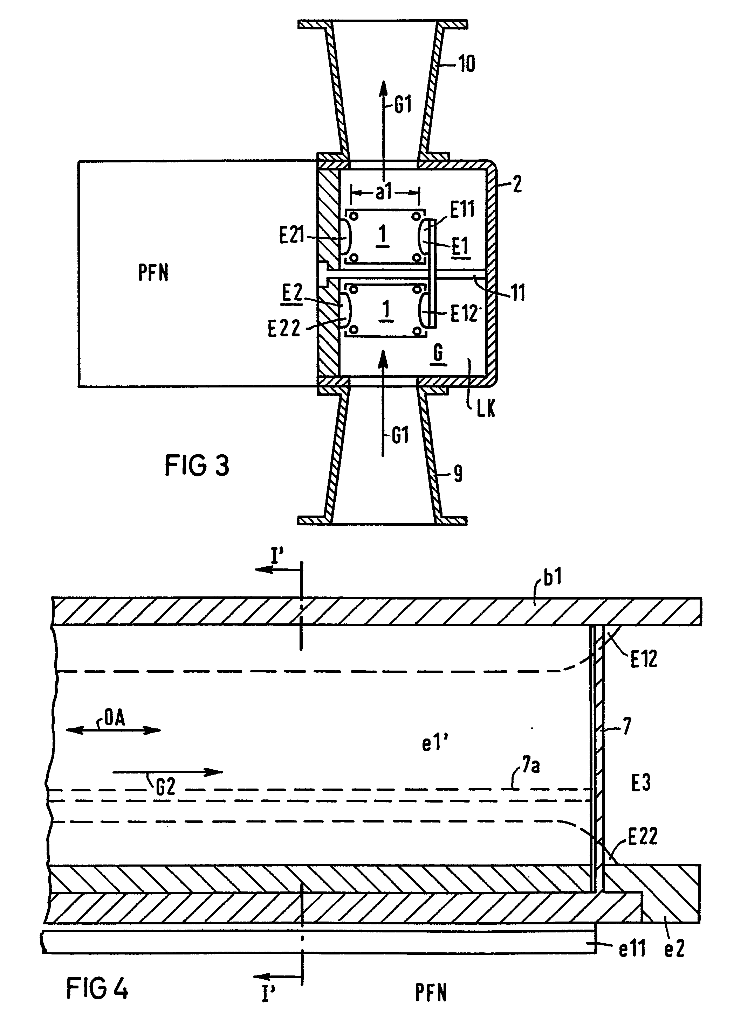

Der Hochenergielaser des TE-Typs nach Fig. 1 arbeitet nach dem Prinzip der Anregung durch möglichst homogene, lichtbogenfreie Kondensatorentladung im Gasraum G zwischen mindestens zwei parallel zur optischen Achse OA des Lasers innerhalb einer Laserkammer LK (siehe Fig. 3) sich erstreckenden und mit Abstand a1 einander gegenüberliegenden ersten und zweiten Elektroden E1 und E2 die – wie noch erläutert – in Elektrodenpaare E11, E12 bzw. E21, E22 aufgeteilt sind. Die Elektroden E1, E2 sind zusammen mit Vorionisierungseinrichtungen V1, V2 innerhalb des gasdichten Gehäuses 2 der Laserkammer LK (Fig. 3) angeordnet. Die Vorionisierungseinrichtungen V1, V2 sind im dargestellten Ausführungsbeispiel, siehe Fig. 1, 2, als stabförmige Hilfselektroden ausgeführt, bestehend aus einem Innenleiter 3 und einem diesen umhüllenden Dielektrikum 4 und sind laserachsparallel und mit Überschlagabstand a2 zur jeweils zugehörigen Teilelektrode E11, E12 bzw. E21, E22 angeordnet. Ausbildung, Anordnung und Schaltung derartiger Vorionisierungsstäbe bzw. Hilfselektroden und Elektroden sind in EP-A-0 048 407 näher beschrieben; es wird hier deshalb nicht näher darauf eingegangen.

Die Elektrode E1, d.h. ihre beiden Teilelektroden E11, E12, die auf der dem pulsformenden Netzwerk PFN abgelegenen Seite angeordnet sind, sind über eine Elektrodenbrücke b1 an eine Stromzuführung e1 angeschlossen, die Elektrode E2, d.h. ihre beiden Teilelektroden E21, E22, die dem pulsformenden Netzwerk PFN anliegen, sind an eine Stromrückführung e2 angeschlossen, die auch als leitende Brücke zwischen den Teilelektroden E21, E22 ausgebildet sein kann, aber nicht sein muss, und die von einer grossen Metallplatte, die vorzugsweise zugleich das Erdpotential definiert, gebildet wird. Die elektrische Verbindung der Elektroden eines Hochenergielasers mit einem pulsformenden Netzwerk wie auch die Schaltung dieses Netzwerkes selbst sind in EP-A-0 024 576 näher erläutert, so dass hier im einzelnen nicht darauf eingegangen zu werden braucht. Erwähnt sei lediglich, dass das pulsformende Netzwerk PFN, z.B. in Blümlein- oder in Charge-Transfer-Schaltung geschaltet sein kann und dass zu diesem Netzwerk auch eine schnelle Hochspannungsschaltstrecke gehört, die z.B. durch Thyratrons, durch eine Funkenstrecke oder einen Plasmaschalter verwirklicht sein kann. Letzterer wurde in einem Ausführungsbeispiel auf der Internationalen Pulsed Power Conference 1981 im Referat 16.3 in Albuquerque/Neu-Mexico vorgestellt.

Die Laserkammer LK ist ferner mit Mitteln zum Hindurchleiten des Lasergases – nach einem 1. Ausführungsbeispiel – transversal zur optischen Achse OA des Lasers versehen, was in Fig. 1 bis 3 durch die Pfeile G1 angedeutet ist.

Beim Hochenergielaser nach der Erfindung kann es sich z.B. um einen Excimer-Laser oder $CO_2$-Laser handeln; die Gaszusammensetzung und die Physik der Entladungsvorgänge des ersteren sind z.B. in der Zeitschrift «Physics Today», Mai 1978, Seiten 32 bis 39, näher erläutert, weshalb hier von einer Erläuterung abgesehen werden kann.

Insbesondere Fig. 1 zeigt, dass die einander gegenüberliegenden Laserelektroden E1, E2 aus je zwei Teilelektroden E11, E12 bzw. E21, E22 bestehen, wobei E11 und E12 durch eine Elektrodenbrücke b1 elektrisch und mechanisch miteinander verbunden sind. Die Elektrodenbrücke b1 ist eine laserachsparallel langgestreckte Platte; die Teilelektroden sind in der gleichen Richtung sich erstreckende Metall-Leisten. Die Teilelektroden E21, E22 werden von Stromrückführungsplatten e2 getragen und elektrisch kontaktiert, welche, wie noch erläutert, zwischen den Teilelektroden E21, E22 mit elektrischen Durchführungen für die Stromzuführungen e1 versehen sind. Die als gut leitende Metallplatten ausgeführten Stromrückführungen e2 können bei geringer Dichte bzw. geringem Abstand von stift-, stab- oder bolzenartigen Stromzuführungen e1 als eine Brückenplatte mit entsprechenden Aussparungen für die Durchführungen ausgebildet sein; im Ausführungsbeispiel sind e2, e2 getrennte Plattenteile. Die paarweise einander gegenüberliegenden Teilelektroden E11, E21 bzw. E12, E22 spannen zwischen sich Gasentladungsräume 1 auf, die, da sie auf zwei Teilelektrodenpaare aufgeteilt sind, auch als Teilentladungsräume bezeichnet werden können. Im Zwischenraum m zwischen den Teilentladungsräumen 1,1 sind nun die als Ganzes mit e1 bezeichneten isolierstoffummantelten Stromzuführungen für die Elektrodenbrücke b1 der dem pulsformenden Netzwerk PFN abgelegenen Teilelektroden E11, E12 angeordnet. Diese Stromzuführungen e1 sind durch den Teilelektroden-Zwischenraum zwischen E11 und E12 und durch den Zwischenraum m zwischen den beiden Teilentladungsräumen 1,1 sowie zwischen den gegenüberliegenden Teilelektroden E21 und E22 und die zugehörigen Stromrückführungen e2 der zweiten Elektrode E2 isolierend bis zur zugehörigen Bandleiterkondensator-Kontaktfläche, in diesem Falle der Anschlussfahne f1 eines Kondensatorbelages des pulsformenden Netzwerkes PFN, hindurchgeführt und damit elektrisch verbunden. Dazu dient an der Stromzuführung e1 eine entsprechend abgeflachte Anschlusslasche e11. Der zur Anschlussfahne f1 gehörende Kondensatorbelag ist bei c1 gestrichelt angedeutet. Die Kontaktierung zwischen Lasche e11 und Fahne f1 erfolgt bevorzugt durch Hartlöten oder Schweissen, jedoch sind auch Schraubverbindungen grundsätzlich möglich. Am anderen Ende der Stromzuführung e1 erfolgt entsprechend eine satte Kontaktierung zwischen Stromzuführung e1 und Elektrodenbrücke b1 durch Einschrauben und/oder Hartlöten oder Schweissen. Die Stromrückführungen e2 sind jeweils mit nicht näher dargestellten Anschlussfahnen c21 des Kondensatorbelages c2 des pulsformenden Netzwerkes PFN kontaktiert, wobei der Belag c2 im Durchführungsbereich eine Aussparung c20 aufweist.

Wie es Fig. 1 in Verbindung mit Fig. 2 zeigt, sind die ummantelten Stromzuführungen e1 in Laserachsrichtung OA jeweils mit Abstand a3 zueinander angeordnet, so dass sich laserachsquer verlaufende Zwischenräume 5 für die transversale Gasströmung G1 ergeben.

Figuren 1 und 2 zeigen ferner, dass die Stromzuführungen e1 als stift-, stab- oder bolzenartige Leiterstäbe 6 ausgeführt sind, die mindestens auf ihrer durch den Gasraum verlaufenden, zwischen den gegenüberliegenden Teilelektroden E11, E12 und E21, E22 liegenden Teilstrecke a1, welche den Teilentladungsräumen 1 entspricht, verjüngt sind, so dass jeweils zwischen dem Leiterstab 6 der Stromzuführung e1 und seinem Isolierstoffmantel 7 Hohlräume 8 gebildet sind. Durch die Hohlräume 8 wird der Wellenwiderstand für Gleitfunken an der Oberfläche der Isolierstoff-Mäntel 7 erhöht. Man kann die Länge der Hohlräume auch grösser als a1 machen, aber möglichst nicht kleiner. Die Isolierstoff-Mäntel 7 der einzelnen Leiterstäbe 6 bestehen aus einem temperaturbeständigen, UVstrahlungsresistenten Kunststoff, z. B. PVDF (Polyvinylidenfluorid) oder sind als Röhrchen, bestehend aus hochreiner $Al_2O_3$-Keramik, ausgeführt. Aus Gründen einer besseren Feldverteilung verläuft bei den Leiterstäben 6 der Übergang vom Vollquerschnitt an ihren Enden auf den verjüngten Querschnitt in ihrem Mittelbereich stetig bzw. flach S-förmig, so wie es die Figuren 1 und 2 beispielsweise verdeutlichen. Im Bereich des dem pulsformenden Netzwerk PFN zugewandten Endes des Leiterstabes 6 der Stromzuführung e1 ist der Isolierstoff-Mantel mit einer Verdickung (Fusspartie) 7a wesentlich grösserer Wandstärke versehen. Diese Verdickung 7a kann bei entsprechendem Platz hohlzylindrisch, sie kann jedoch, wie dargestellt, als Isolierstoffleiste mit entsprechenden Durchgangsbohrungen 7b ausgeführt sein.

Die Fusspartie 7a nimmt in Kammern 7c ihrer Wand Schirmelektroden E3 auf, die an das Massepotential der Stromrückführungen e2 über Verbindungsleiter e3 elektrisch angeschlossen sind und in die Zwischenräume m1 zwischen den Teilelektroden E21, E22 der zweiten Elektrode E2 einerseits und der Stromzuführung e1 andererseits ragen. Eine besonders günstige Ausführung besteht dabei darin, dass sich beidseits der Stromzuführung e1 messerartige oder in Form von Stiftreihen ausgebildete Schirmelektroden E3 sich in die Kammer 7c bzw. den Zwischenraum m1 erstrekken. Sie werden durch die im Querschnitt etwa U-förmigen Wandteile der Kammern 7c umgeben. Die dargestellten messerförmigen Schirmelektroden E3 lassen sich sehr leicht über die Verbindungsleiter e3 mechanisch und elektrisch stabil mit den Stromrückführungs-Platten e2 verbinden, z.B. als Kontaktlaschen ausführen und in entsprechende (nicht dargestellte) Nuten kontaktgebend einsetzen.

Bevorzugt ragen die Schirmelektroden E3 mindestens soweit in den Gasraum G, m1, wie sich die Zone der Teilelektroden E21, E22 und ihrer zugehörigen Vorionisierungselektroden V2 laserachsquer erstreckt.

Die Teilelektroden E11, E12 bzw. E21, E22 sind in ihre zugehörigen Elektrodenbrücken b1 bzw. Stromrückführungsplatten e2 bevorzugt eingeschraubt; dadurch kann man einen guten Kontaktdruck zwischen ihren Kontaktflächen und den zugehörigen Gegenflächen erzielen und die Teilelektroden im Bedarfsfalle leicht auswechseln. Durch die Hohlräume 8 zwischen den Leiterstäben 6 der Stromzuführungen e1 und den Isolierstoff-Mänteln 7 wird, wie erwähnt, der Wellenwiderstand für Gleitfunken an der Oberfläche des Isoliermaterials erhöht, was der Tendenz zur Bildung von Gleitfunken ebenso entgegenwirkt wie die Anordnung der Schirmelektroden E3 mit ihrer Ummantelung 7a. Da die Hilfselektroden V2 für die Vorionisierung auf dem Potential der Stromzuführung e1 liegen, so baut sich zwischen ihnen und den zugehörigen Teilelektroden E21, E22 ein starkes Feld auf, das zur gewünschten Vorentladung führt. Auf der anderen Seite baut sich ein entsprechendes starkes Feld zwischen den Hilfselektroden V1, die auf dem Potential der Stromrückführung e2 liegen, und den unmittelbar gegenüberstehenden Teilelektroden E11, E12 auf. Auf dieser Seite der Laserkammer kann man aber ohne besondere Massnahmen zur Verhinderung von Gleitfunken auskommen, weil sich die Stromzuführung e1, Elektrodenbrücke b1, sowie die Elektroden E11 und E12 auf nahezu gleichem Potential befinden.

Figur 2 zeigt, dass sich eine kammerartige Konfiguration der Zwischenräume 5 und der Leiterstäbe 6 mit ihren Isolierstoff-Mänteln 7 ergibt, die im bezug auf das Lasergas G1 einen relativ geringen Durchströmungswiderstand hat. Die äussere Form des Isolierstoffkörpers 7 ist insbesondere strömungstechnischen Erfordernissen für einen möglichst geringen Strömungswiderstand anzupassen. So kann z.B. der Verlauf der durch die Zwischenräume 5 definierten Strömungskanäle in Gasströmungsrichtung diffusor- oder venturi-rohrartig sein; durch eine solche strömungsgünstige Form kann man Pumpleistung einsparen.

Aus Fig. 3 ist erkennbar, dass die Elektrodenanordnung E1, E2 in das schon erwähnte Gehäuse 2, auch als Tank bezeichnet, eingebracht ist, dessen Material resistent gegenüber den aggressiven Lasergasen ist, die eine Mischung von Edelgasen mit Halogenen oder halogenhaltigen Verbindungen darstellen oder auch Stickstoff und Kohlendioxid-Gemische enthalten können. Die Ein- und Ausströmtrichter 9, 10 sind mit dem externen Gaskreislauf, der die Ventilatoren und entsprechende Gas-Reinigungs- und Gas-Kühlungs-Aggregate enthält, verbunden. Eine Trennwand 11 aus Isoliermaterial verhindert, dass das Gas am Entladungsraum 1,1 vorbeiströmt.

Die Anordnung erlaubt es, ebenso wie die im folgenden anhand von Fig. 4 erläuterte Anordnung, über Spiegel bzw. andere optische Elemente beide Entladungsstrecken E11 – E21 und E12 – E22 hintereinander zu schalten oder sie als parallele Verstärker bzw. Oszillatoren zu betreiben.

Beim Ausführungsbeispiel nach Fig. 4, der – wie erwähnt – auch das Querschnittsbild nach Fig. 1 zugeordnet werden kann, wird der Gasraum G bzw. werden die beiden Teilentladungsräume 1,1 in Richtung der optischen Achse OA vom Lasergas durchströmt (siehe Pfeil G2). Dies ist sinnvoll, wenn der Laser nur mit einer kleinen Wiederholfrequenz betrieben werden soll und deshalb der Gasaustausch zwischen zwei aufeinanderfolgenden Laserimpulsen bei longitudinaler Gasströmung gewährleistet ist. In diesem Falle ist die isolierstoffummantelte Stromzuführung e1′ ein breiter, durchgehender, durchbrechungsloser plattenartiger Körper, welcher zudem den Vorteil der geringeren Induktivität aufweist. Deshalb entfallen die in Fig. 2 dargestellten Zwischenräume 5; die Isolierstoffummantelung 7 ist vielmehr ebenso wie die Stromzuführung e1′ ein durchgehender plattenartiger Körper. Es ist auch möglich, für den Fall einer transversalen Lasergasströmung gemäss Pfeilen G1 die Stromzuführung e1 als plattenartigen Körper mit Durchbrechungen für die Gasströmung auszuführen und einen solchen durchbrochenen Körper durch die Isolierstoff-Ummantelung 7 entsprechend einzuhüllen (nicht dargestellt).

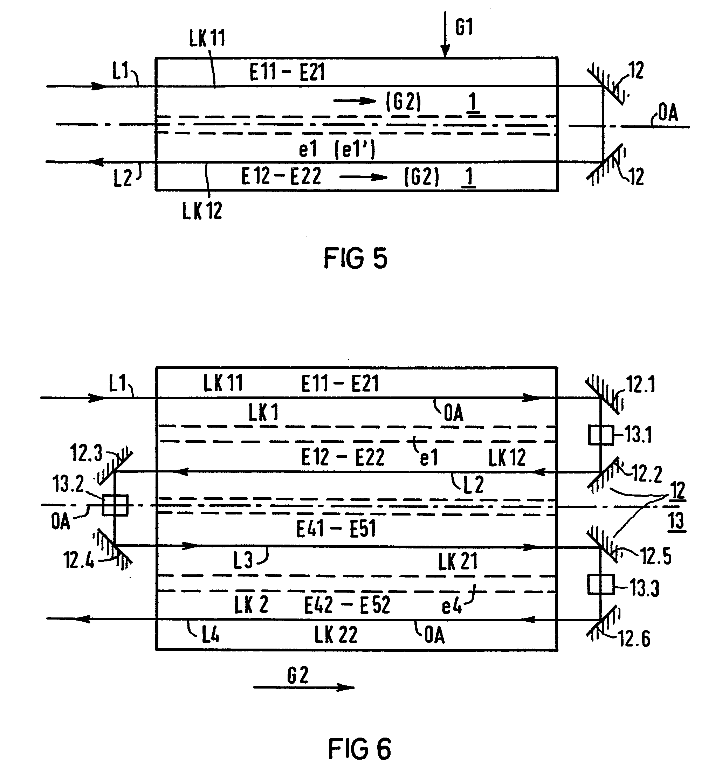

Fig. 5 zeigt den Laser nach Fig. 1 bis 3, stark vereinfacht, wobei seine beiden Teilentladungsräume 1,1 zwischen den paarweise einander gegenüberliegenden Teilelektroden E11–E21 bzw. E12–E22 über Strahlenumlenkeinrichtungen 12 optisch hintereinander geschaltet sind im Sinne eines optischen Verstärkers, so dass der Laserlichtstrahl L1 nach Durchgang durch die erste Laserteilkammer LK1, nach zweimaliger Reflexion an den Strahlenumlenkeinrichtungen 12,12 und nach Durchgang durch die zweite Laserteilkammer LK2 als verstärkter Laserstrahl L2 letztere verlässt. Die transversale Gasströmung ist durch den Pfeil G1 und die Stromzuführung bei e1 gestrichelt angedeutet. Es kann sich grundsätzlich jedoch auch um eine longitudinale Gasströmung G2 bei entsprechender plattenförmiger Stromzuführung e1′ handeln. Als Strahlenumlenkeinrichtungen 12 kommen insbesondere Spiegel, Prismen, Gitter oder dergleichen in Frage. Im dargestellten Fall sind zwei Metallspiegel verwendet, die unter 45° zum Laserstrahl bzw. der optischen Achse OA geneigt sind.

Beim vierten Ausführungsbeispiel nach Fig. 6 ist vorgesehen, dass mehrere, jeweils zwei einander gegenüberliegende Teilelektrodenpaare aufweisende Laserkammern LK1, LK2 in – bezogen auf ihre optischen Achsen OA – transversaler Richtung zu einem Laser-Mehrfachsystem aneinandergereiht sind. Dabei sind die einzelnen Laserkammern LK1, LK2 und die Laserteilkammern LK11, LK12 usw. des Laser-Mehrfachsystem mit ihren Teilentladungsräumen über die anhand der Fig. 5 bereits erläuterten Strahlenumlenkeinrichtungen, als Ganzes mit 12 und im einzelnen mit 12.1 bis 12.6 bezeichnet, optisch zueinander in Reihe geschaltet, derart, dass der Laserlichtstrahl L1 nach zweimaliger Reflexion an den Spiegeln 12.1, 12.2 die zweite Laserteilkammer LK12 als Strahl L2 verlässt, nach zweimaliger Reflexion an 12.3 und 12.4 als Laserstrahl L3 durch die dritte Laserteilkammer LK21 hindurchläuft und nach zweimaliger Umlenkung bei 12.5 und 12.6 die vierte Laserteilkammer LK22 als Laserstrahl L4 verlässt, der entsprechend verstärkt ist. Wie die Richtungspfeile an den Laserstrahlen L1 bis L4 es verdeutlichen, soll dabei das Laser-Mehrfachsystem in der einen Vorzugsrichtung strahlen und nicht in der anderen Richtung. Damit dies in allen Betriebszuständen gewährleistet ist, sind im Strahlenweg zwischen den Strahlenumlenkeinrichtungen 12 optische Elemente 13 angeordnet, welche als sogenannte unidirektionale Elemente in der gewünschten Strahlenrichtung bevorzugt durchlässig sind. Diese können aus an sich bekannten sättigbaren Lichtabsorbern bestehen oder aus sogenannten Faraday-Rotatoren. Im dargestellten Ausführungsbeispiel sind drei solche optischen Elemente 13.1 bis 13.3 jeweils zwischen zwei einander benachbarten Umlenkeinrichtungen in den Strahlengang eingeschaltet. Die bevorzugte Gasströmungsrichtung für dieses Ausführungsbeispiel ist die longitudinale (siehe Pfeil G2), jedoch kann – wenn man besondere Strömungskanäle zwischen den einander benachbarten Laserkammern vorsieht, auch eine transversale Gasströmung von Vorteil sein. In Fig. 6 sind die Teilelektroden der ersten Laserkammer LK1 so wie in Fig. 5 bezeichnet, bei der zweiten Laserkammer LK2 sind die einander gegenüberliegenden Teilelektroden mit E41–E51 und E42–E52 bezeichnet.

### Patentansprüche

1. Laser des TE-Typs, insbesondere Hochenergielaser, mit Anregung durch möglichst homogene, lichtbogenfreie Kondensatorentladung im Gasraum zwischen mindestens zwei parallel zur optischen Achse des Lasers innerhalb einer Laserkammer sich erstreckenden und mit Abstand einander gegenüberliegenden ersten und zweiten Elektroden, die zusammen mit einer Vorionisierungseinrichtung innerhalb eines gasdichten Gehäuses der Laserkammer angeordnet und an eine Sromzuführung bzw. an eine Stromrückführung angeschlossen sind, wobei die Laserkammer mit Mitteln zum Hindurchleiten des Lasergases versehen ist und wobei die Stromzu- und Stromrückführungen an ein z.B. in Blümlein- oder in Charge-Transfer-Schaltung geschaltetes pulsformendes Netzwerk anschliessbar sind, dadurch gekennzeichnet, dass

a) die einander gegenüberliegenden Laserelektroden (E1, E2) aus mindestens je zwei Teilelektroden (E11, E12 bzw. E21, E22) bestehen und die dem pulsformenden Netzwerk (PFN) abgewandten ersten Teilelektroden (E11, E12) durch eine Elektrodenbrücke (b1) miteinander verbunden sind; dass

b) die paarweise einander gegenüberliegenden Teilelektroden (E11–E21 bzw. E12–E22) zwischen sich Teilentladungsräume (1) aufspannen und dass

c) im Zwischenraum (m) zwischen den Teilentladungsräumen (1,1) isolierstoffummantelte Stromzuführungen (e1) für die Elektrodenbrücke (b1) der Teilelektroden (E11, E12) angeordnet und durch den Teilelektroden-Zwischenraum (m) und die Stromrückführung (e2) der zweiten, dem pulsformenden Netzwerk (PFN) anliegenden zweiten Teilelektroden (E21, E22) isolierend bis zur zugehörigen Kondensator-Kontaktfläche (f1) des Netzwerkes (PFN) hindurchgeführt sind.

2. Laser nach Anspruch 1, mit Strömung des Lasergases transversal zur optischen Achse, dadurch gekennzeichnet, dass die isolierstoffummantelten Stromzuführungen (e1) als Einzelkörper ausgebildet und in Laserachsrichtung (OA) mit Abstand (a3) zueinander angeordnet oder als durchgehender plattenförmiger Körper mit Durchbrechungen ausgeführt sind, so dass sich laserachsquer verlaufende Zwischenräume (5) für die transversale Gasströmung (G1) ergeben.

3. Laser nach Anspruch 1, mit longitudinaler Strömung des Lasergases parallel zur optischen Achse, dadurch gekennzeichnet, dass die isolierstoffummantelte Stromzuführung (e1') ein durchgehender, durchbrechungsloser plattenartiger Körper ist.

4. Laser nach einem der Ansprüche 1 bis 3, dadurch gekennzeichnet, dass in die Zwischenräume (m1) zwischen den Teilelektroden (E21, E22) der zweiten Elektrode (E2) einerseits und der Stromzuführung (e1) andererseits isolierstoffummantelte Schirmelektroden (E3) ragen, welche mit dem (Masse-) Potential der Stromrückführung (e2) elektrisch verbunden sind.

5. Laser nach Anspruch 4, mit Vorionisierungselektroden, die im Gasraum mit geringem Abstand zur Elektrodenoberfläche laserachsparallel angeordnet sind, dadurch gekennzeichnet, dass die Schirmelektroden (E3) mindestens so weit in den Gasraum (G) hineinragen, wie sich die Zone der Teilelektroden (E21, E22) und ihrer Vorionisierungselektroden (V2) laserachsquer erstreckt.

6. Laser nach Anspruch 4 oder 5, dadurch gekennzeichnet, dass sich beidseits der Stromzuführung (e1) messerartige oder in Form von Stiftreihen ausgebildete Schirmelektroden (E3) von der Stromrückführung (e2) der zweiten Teilelektroden (E21, E22) in den Gasraum (1, m, G) hinein erstrekken und dass die Schirmelektroden (E3) von einer im Querschnitt etwa U-förmigen Isolierstoffummantelung (7) umgeben sind.

7. Laser nach Anspruch 2, dadurch gekennzeichnet, dass die Stromzuführungen (e1) als stift- oder bolzenförmige Leitestäbe (6) ausgeführt sind, die auf ihrer durch den Gasraum (1, m, G) verlaufenden, zwischen den gegenüberliegenden Teilelektroden (E11–E21 bzw. E12–E22) liegenden Teilstrecke verjüngt sind, so dass jeweils zwischen dem Leiterstab (6) und seinem Isolierstoff-Mantel (7) Hohlräume (8) gebildet sind.

8. Laser nach Anspruch 7, dadurch gekennzeichnet, dass der Übergang vom Vollquerschnitt (6c) auf den verjüngten Querschnitt des jeweiligen Leiterstabes (6) stetig verläuft.

9. Laser nach Anspruch 7 oder 8, dadurch gekennzeichnet, dass sich die Hohlräume (8) mindestens von der laserachsqueren Zone der Oberflächen der dem pulsformenden Netzwerk (PFN) abgewandten Teilelektroden (E11, E12) bis hin zur laserachsqueren Zone der Oberflächen der dem pulsformenden Netzwerk (PFN) anliegenden Teilelektroden (E21, E22) erstrecken.

10. Laser nach einem der Ansprüche 2 bis 8, dadurch gekennzeichnet, dass die Isolierstoffummantelung der Stromzuführung (e1) ein Isolierstoffkörper ist, der im Bereich der Schirmelektroden (E3) mit einer verstärkten Fusspartie baulich vereinigt ist, welche in ihrer Wand Kammern zur Aufnahme der Schirmelektroden (E3) aufweist.

11. Laser nach einem der Ansprüche 1 bis 10, dadurch gekennzeichnet, dass die beiden Teilentladungsräume (1,1) zwischen den paarweise einander gegenüberliegenden Teilelektroden (E11–E21 bzw. E12–E22) über Strahlenumlenkeinrichtungen (12) wie Spiegel, Prismen, Gitter optisch hintereinandergeschaltet sind (Fig. 5).

12. Laser nach einem der Ansprüche 1 bis 11, dadurch gekennzeichnet, dass mehrere, jeweils zwei einander gegenüberliegende Teilelektrodenpaare (E11–E21, E12–E22 bzw. E41–E51, E42–E52) aufweisende Laserkammern (LK1, LK2) in – bezogen auf ihre optischen Achsen (OA) – transversaler Richtung zu einem Laser-Mehrfachsystem aneinandergereiht sind (Fig. 6).

13. Laser nach den Ansprüchen 11 und 12, dadurch gekennzeichnet, dass die einzelnen Laserkammern des Laser-Mehrfachsystem mit ihren Teilentladungsräumen über die genannten Strahlenumlenkeinrichtungen (12.1 bis 12.6) optisch in Reihe geschaltet sind.

14. Laser nach Anspruch 13, dadurch gekennzeichnet, dass er mit Mitteln zur Erzeugung einer longitudinalen Lasergasströmung (G2) versehen ist.

15. Laser nach einem der Ansprüche 11 bis 14, dadurch gekennzeichnet, dass im Strahlenweg zwischen den Strahlenumlenkeinrichtungen in der gewünschten Strahlenrichtung bevorzugt durchlässige optische Elemente, sog. unidirektionale Elemente (13.1, 13.2, 13.3) in Form von sättigbaren Absorbern, Faraday-Rotatoren o.dgl. eingeschaltet sind.

**Claims**

1. A TE-type laser, in particular a high-energy laser, excited by as homogenous as possible arc-free capacitor discharge in the gas compartment between at least two first and second electrodes extending parallel to the optical axis of the laser inside a laser chamber and lying opposite and spaced from each other, which electrodes are arranged together with a pre-ionisation device inside a gas-tight housing of the laser chamber and are connected to a current supply and to a current return respectively, the laser chamber being provided with means for passing the laser gas through it, and the current supplies and returns being connectable to a pulse-forming network connected, for example, in Blümlein or charge-transfer arrangement, characterised in that

a) the opposite laser electrodes (E1, E2) consist of at least two part-electrodes in each case (E11, E12 and E21, E22 respectively) and the first part-electrodes (E11, E12) remote from the pulse-forming network (PFN) are connected to each other by an electrode bridge (b1); in that

b) the part-electrodes (E11–E21 and E12–E22 respectively) in paired opposite arrangement span part discharge compartments (1) between them, and in that

c) current supplies (e1), covered with insulating material, for the electrode bridge (b1) of the part-electrodes (E11, E12) are arranged in the interspace (m) between the part discharge compartments (1,1) and pass in insulating manner through the part-electrode-interspace (m) and the current return (e2) of the second part-electrodes (E21, E22) abutting the pulse-forming network (PFN) up to the associated capacitor contact surface (f1) of the network (PFN).

2. Laser according to claim 1, having a laser gas flow transverse to the optical axis, characterised in that the current supplies (e1) covered with insulating material are designed as individual bodies spaced (a3) along the laser axis (OA) or are continous plate-like bodies with apertures, so that interspaces (5) running across the laser axis are produced for the transverse gas flow (G1).

3. Laser according to claim 1, having longitudinal flow of the laser gas parallel to the optical axis, characterised in that the current supply (e1′) covered with insulating material is a continuous, aperture-less plate-like body.

4. Laser according to one of claims 1 to 3, characterised in that shielding electrodes (E3) covered with insulating material project into the interspaces (m1) between the part-electrodes (E21, E22) of the second electrode (E2) on the one hand and the current supply (e1) on the other hand, these shielding electrodes being electrically connected to the (ground) potential of the current return (e2).

5. Laser according to claim 4, having pre-ionisation electrodes which are arranged parallel to the axis of the laser in the gas compartment at a short distance from the electrode surface, characterised in that the shielding electrodes (E3) project at least as far into the gas compartment (G) as the zone of the part-electrodes (E21, E22) and their pre-ionisation electrodes (V2) extends across the laser axis.

6. Laser according to claim 4 or 5, characterised in that on both sides of the current supply (e1), shielding electrodes (E3) of a knife-like design or in the form of rows of pins extend from the current return (e2) of the second part-electrodes (E21, E22) into the gas compartment (1, m, G) and in that the shielding electrodes (E3) are enclosed by a covering (7) made of insulating material whose cross-section is roughly U-shaped.

7. Laser according to claim 2, characterised in that the current supplies (e1) have the form of pin- or bilt-like conductor rods (6), which are thinner over the part of their length running through the gas compartment (1, m, G) and lying between opposite part-electrodes (E11–E21 and E12–E22), so that cavities (8) are formed in each case between the conductor rod (6) and its insulating covering (7).

8. Laser according to claim 7, characterised in that the transition from the full cross-section (6c) to the thinner cross-section of the respective conductor rod (6) is uniform.

9. Laser according to claim 7 or 8, characterised in that the cavities (8) extend at least from the zone transverse to the laser axis of the surfaces of the part-electrodes (E11, E12) remote from the pulse-forming network (PFN) up to the zone transverse to the laser axis of the surfaces of the part electrodes (E21, E22) abutting the pulse-forming network (PFN).

10. Laser according to one of claims 2 to 8, characterised in that the insulating-material covering of the current supply (e1) is an insulating material body which is structurally integral with a thickened base part in the area of the shielding electrodes (E3), which has recesses in its wall for receiving the shielding electrodes (E3).

11. Laser according to one of claims 1 to 10, characterised in that the two part discharge compartments (1,1) between the part-electrodes (E11–E21 and E12–E22 respectively) in opposite paired arrangement are optically connected in series by means of beam deflecting devices (12), such as mirrors, prisms, gratings (Fig. 5).

12. Laser according to one of claims 1 to 11, characterised in that several laser chambers (LK1, LK2), each comprising two opposite pairs of part-electrodes (E11–E21, E12–E22, and E41–E51, E42–E52 respectively) are arranged adjacently in a transverse direction – relative to their optical axes (OA) – to form a multiple laser system (Fig. 6).

13. Laser according to claims 11 and 12, characterised in that the individual laser chambers of the multiple laser system with their part discharge compartments are connected optically in series via the said beam deflecting devices (12.1 to 12.6).

14. Laser according to claim 13, characterised in that it is provided with means for producing a longitudinal laser gas flow (G2).

15. Laser according to one of claims 11 to 14, characterised in that optical elements, so-called unidirectional elements (13.1, 13.2, 13.3) transmitting preferentially in the desired beam direction and in the form of saturable absorbers, Faraday rotators or the like, are inserted in the beam path between the beam deflector devices.

## Revendications

1. Laser du type TE, notamment laser délivrant une haute énergie, dans lequel l'excitation est réalisée au moyen d'une décharge aussi homogène que possible et exempte d'arc électrique d'un condensateur dans l'espace contenant le gaz entre au moins deux premières et secondes électrodes, qui s'étendent parallèlement à l'axe optique du laser à l'intérieur d'une chambre du laser, sont situées à distance en vis-à-vis l'une de l'autre, sont disposées, ainsi qu'un dispositif de préionisation, à l'intérieur d'un boîtier étanche au gaz de la chambre du laser et sont raccordées à un élément d'alimentation en courant et à un élément de retour du courant, et dans lequel la chambre du laser est équipée de moyens servant à faire circuler le gaz du laser, et les éléments d'alimentation en courant et de retour du courant peuvent être raccordés à un réseau de formation d'impulsions, branché par exemple selon un circuit Blümlein ou un circuit de transfert de charges, caractérisé par le fait

a) que les électrodes (E1, E2) du laser, qui sont réciproquement en vis-à-vis, sont constituées par au moins deux électrodes partielles respectives (E11, E12 ou E21, E22) et les premières électrodes partielles (E11, E12), qui sont situées à l'opposé du réseau (PFN) de formation d'impulsions, sont reliées entre elles par un pont de liaison (b1);

b) que les électrodes partielles (E11–21 ou E12–22), qui sont situées réciproquement en vis-à-vis par couples, enserrent entre elles des espaces de décharge partielle (1), et

c) que des éléments (e1) d'alimentation en courant, qui sont munis d'une gaine en matériau isolant et sont prévus pour le pont (b1) de liaison des électrodes partielles (E11, E12), sont disposés dans l'espace intercalaire (m) entre les espaces de décharge partielle (1,1) et traversent l'espace intercalaire (m) situé entre les électrodes partielles, et l'élément (e2) de retour du courant des secondes électrodes partielles (E21, E22) raccordées au réseau (PFN) de formation d'impulsions traverse ledit espace intercalaire d'une manière isolée jusqu'à la surface associée (f1) du contact du condensateur du réseau (PFN).

2. Laser suivant la revendication 1, dans lequel l'écoulement du gaz du laser s'effectue transversalement par rapport à l'axe optique, caractérisé par le fait que les éléments (e1) d'alimentation en courant, qui sont munis d'une gaine en matériau isolant, sont réalisés sous la forme de corps individuels et sont disposés à une distance (a3) les uns des autres dans la direction (OA) de l'axe du laser ou bien sont réalisés sous la forme de corps en forme de plaques d'un seul tenant, munies de perçages, de sorte que l'on obtient des espaces intercalaires (5), qui s'étendent transversalement par rapport à l'axe du laser, pour l'écoulement transversal (G1) du gaz.

3. Laser suivant la revendication 1, dans lequel l'écoulement longitudinal du gaz du laser s'effectue parallèlement à l'axe optique, caractérisé par le fait que l'élément (e1') d'alimentation en courant, qui est muni d'une gaine en matériau isolant, est un corps en forme de plaque d'un seul tenant, sans perforations.

4. Laser suivant l'une des revendications 1 à 3, caractérisé par le fait que des électrodes de protection (E3), qui sont reliées électriquement au potentiel (à la masse) de l'élément (e2) de retour du courant, s'étendent dans les espaces intercalaires (m1) présents entre les électrodes partielles (E21, E22) de la seconde électrode (E2) d'une part et de l'élément (e1) d'alimentation en courant d'autre part.

5. Laser suivant la revendication 4, comportant des électrodes de préionisation qui sont disposées parallèlement à l'axe du laser dans l'espace contenant le gaz, en étant situées à une faible distance de la surface des électrodes, caractérisé par le fait que les électrodes de protection (E3) pénètrent dans l'espace (G) contenant le gaz, au moins au point que la zone des électrodes partielles (E21, E22) et de leurs électrodes de préionisation (V2) s'étend transversalement par rapport à l'axe du laser.

6. Laser suivant la revendication 4 ou 5, caractérisé par le fait que des électrodes de protection (E3) réalisées sous la forme de couteaux ou bien sous la forme de séries de broches s'étendent, des deux côtés de l'élément (e1) d'alimentation en courant, dans l'espace (1,m,G) contenant le gaz, à partir de l'élément (e2) de retour du courant des secondes électrodes partielles (E21, E22) et que les électrodes de protection (E3) sont entourées par une gaine en matériau isolant (7) possédant une section transversale approximativement en forme de U.

7. Laser suivant la revendication 2, caractérisé par le fait que les éléments (e1) d'alimentation en courant sont constitués par des barreaux conducteurs (6) réalisés sous la forme de broches ou de boulons qui se rétrécissent sur leur section partielle traversant l'espace (1,m,g) contenant le gaz et situées entre les électrodes partielles (E11–E21) ou (E12–E22), disposées en vis-à-vis, de manière à former des cavités (8) respectivement entre le barreau conducteur (6) et sa gaine en matériau isolant (7).

8. Laser suivant la revendication 7, caractérisé par le fait que la jonction entre la section transversale complète (6c) et la section transversale rétrécie du barreau conducteur respectif (6) est continue.

9. Laser suivant la revendication 7 ou 8, caractérisé par le fait que les cavités (8) s'étendent au moins depuis la zone, qui est transversale par rapport à l'axe du laser, des surfaces des électrodes partielles (e11, e12) situées à l'opposé du réseau (PFN) de formation d'impulsions, jusqu'à la zone, qui s'étend transversalement par rapport à l'axe du laser, des surfaces des électrodes partielles (E21, E22) raccordées au réseau (PFN) de formation d'impulsions.

10. Laser suivant l'une des revendications 2 à 8, caractérisé par le fait que la gaine en matériau isolant de l'élément (e1) d'alimentation en courant est un corps en matériau isolant qui est réuni, du point de vue construction, au voisinage de l'électrode de protection (E3), à une partie renforcée formant pied, qui possède, dans sa paroi, des chambres servant à recevoir les électrodes de protection (E3).

11. Laser suivant l'une des revendications 1 à 10, caractérisé par le fait que les deux espaces de décharge partielle (1,1) situés entre les électrodes partielles (E11–E21 ou E12–E22) disposées réciproquement en vis-à-vis par couples, sont branchés optiquement en série par l'intermédiaire de dispositifs (12) de renvoi du rayonnement, par exemple des miroirs, des prismes, des réseaux.

12. Laser suivant l'une des revendications 1 à 11, caractérisé par le fait que plusieurs chambres (LK1, LK2) du laser, qui possèdent chacune deux couples d'électrodes partielles (E11–E21, E12–E22 ou E41–E51, E42–E52), qui sont situées réciproquement en vis-à-vis, sont branchées en série dans la direction transversale – par rapport à leurs axes optiques (OA) – de manière à former un système laser multiple. (Figure 6).

13. Laser suivant les revendications 11 et 12, caractérisé par le fait que les différentes chambres du système laser multiple sont branchées optiquement en série par leurs espaces de décharge partielle, par l'intermédiaire desdits dispositifs de renvoi du rayonnement (12.1 à 12.6).

14. Laser suivant la revendication 13, caractérisé par le fait qu'il comporte des moyens pour produire un écoulement longitudinal de gaz (G2).

15. Laser suivant l'une des revendications 11 à 14, caractérisé par le fait que des éléments optiques transparents de préférence dans la direction désirée de rayonnement, à savoir ce qu'on appelle des éléments unidirectionnels (13.1, 13.2, 13.3), sous la forme d'absorbeurs pouvant être saturés, de rotateurs de Faraday ou analogues sont montés dans le trajet du rayonnement entre les dispositifs de renvoi du rayonnement.

FIG 1

FIG 2

0 074 586

FIG 3

FIG 4

PFN

15

**FIG 5**

**FIG 6**